# EUROPÄISCHE PATENTSCHRIFT

(11) **EP 1 084 887 B1**
(45) Veröffentlichungstag und Bekanntmachung des Hinweises auf die Patenterteilung: **15.08.2007**
(21) Anmeldenummer: 00119621.1
(22) Anmeldetag: 08.09.2000
(51) Int. Cl.: B60J 7/20, B62D 25/10

(54) **Cabriolet-Fahrzeug mit einem unterhalb eines Deckelteils ablegbaren Dach**
Convertible vehicle with a roof storable beneath a cover element
Cabriolet avec un toit escamotable sous un élément de couvercle

(30) Priorität: 13.09.1999 DE 19943860
(43) Veröffentlichungstag der Anmeldung: 21.03.2001
(73) Patentinhaber: Wilhelm Karmann GmbH, 49084 Osnabrück (DE)
(72) Erfinder: Exner, Markus, 49191 Belm (DE); Russke, Klaus, 49143 Bissendorf (DE)
(74) Vertreter: Busse & Busse Patentanwälte

(56) Entgegenhaltungen:
- EP-A- 0 949 105
- DE-U- 29 812 165
- US-A- 5 743 587

## Beschreibung

Die Erfindung betrifft ein Cabriolet-Fahrzeug mit einem im rückwärtigen Fahrzeugbereich unterhalb eines Deckelteils ablegbaren Dach nach dem Oberbegriff des Anspruchs 1.

Die US-A 5,743,587 offenbart ein Cabriolet-Fahrzeug, dessen Verdeck unterhalb eines Verdeckkastendeckels, der während seiner Öffnung mit der Fahrtrichtung einen spitzen Winkel ausbildet, ablegbar ist. Angrenzend an den vorderen Randbereich des Verdeckkastendeckels, befindet sich die Durchtrittsöffnung für das ein- und ausfahrende Verdeck. Um diese bei geöffnetem Verdeck vollständig abzudecken, ist der Verdeckkastendeckel mit einer flächenhaften Erweiterung versehen, die bei geschlossenem Verdeck unterhalb des Verdeckkastendeckels gehalten ist. Der Mittelteil der Erweiterung weist dabei mit seiner bei geschlossenem Dach die Oberseite ausbildenden Seite nach unten, seitlich an den Mittelteil sind Flügelbereiche angelenkt, die bei geöffnetem Dach fluchtend neben dem Mittelbereich der Erweiterung liegen und bei geschlossenem Dach an diesen herangeklappt sind.

Aus der DE 298 12 165 U ist ebenfalls ein Cabriolet-Fahrzeug mit einem unterhalb eines Deckelteils ablegbaren Dach der eingangs genannten Art bekannt. Die dort vorgesehene Erweiterung ist jedoch auch nicht für weitere Funktionen zu nutzen. Aus der EP 0 949 104 A1 ist ein Cabriolet-Fahrzeug bekannt, bei dem ein schwenkbarer Öffnungszylinder sowohl die Öffnungsbewegung zur Freigabe des Gepäckraumes als auch zur Freigabe der Öffnung für das Dach zu bewerkstelligen hat. Eine bewegliche Erweiterung ist hier jedoch nicht vorgesehen.

Es ist Aufgabe der vorliegenden Erfindung, ein Cabriolet-Fahrzeug der eingangs genannten Art zu schaffen, bei dem die bewegliche Erweiterung zur Funktionsverbesserung des Cabriolet-Fahrzeuges genutzt werden kann.

Zur Lösung dieser Aufgabe zeichnet sich das Cabriolet-Fahrzeug der eingangs genannten Art dadurch aus, daß bei geschlossenem Dach die Erweiterung vertikal beabstandet zum Deckelteil gehalten ist und die Erweiterung mit einer Bremsleuchte versehen ist, die bei geöffnetem Dach in eine über die Karosserieoberkante hinausragende, nach hinten sichtbare Position überführbar ist.

Damit ist ein Cabriolet-Fahrzeug zur Verfügung gestellt, bei dem auch in der geöffneten Stellung des Daches durch die bewegliche Erweiterung eine zusätzliche Bremsleuchte zur Verfügung steht. Das Cabriolet-Fahrzeug kann daher mit einer herkömmlichen Bremsleuchte ausgerüstet sein, die beispielsweise in ein heckseitiges Fenster des Daches integriert ist. Bei der Offenstellung des Cabriolet-Fahrzeuges und damit bei abgelegtem Dach kann dann über die Erweiterung die weitere Bremsleuchte in Funktion treten.

Vorzugsweise ist die Bremsleuchte auf der Oberseite der Erweiterung vorgesehen, die bei geschlossenem Dach die sichtbare Oberseite ausbildet, so daß sie auch bei geöffnetem Dach, also in Packstellung der Erweiterung, vor Beschädigung durch Gegenstände innerhalb des Kofferraumes besser geschützt ist.

Die Oberseite kann beispielsweise als lackierte Fläche oder mit Leder bezogen ausgebildet sein. In Packstellung weist sie - zumindest soweit ein mittlerer Bereich der Erweiterung betroffen ist - zur Unterseite des Deckelteils hin und ist daher vor Beschädigungen etwa durch nachrückende Gepäckstücke oder durch Verdeckteile, die sich unterhalb der Erweiterung befinden und gegen diese gedrückt werden könnten, geschützt. Da üblicherweise ein Verdeckkastendeckel, wie er hier in Frage kommt, an seinem vorderen Endbereich zu den Seiten hin sich in Fahrtrichtung erstreckende Ausleger aufweist bzw. insgesamt gekrümmt ist, um eine Anpassung an den Innenraum und an das eintretende Dach mit seinen seitlichen Gestänge- oder Halteteilen zu erhalten, ist in Anpassung hieran die Erweiterung, die den Durchtrittsspalt möglichst weitgehend abdecken soll, in gleicher Orientierung gekrümmt. Dadurch, daß auch in Packstellung diese Orientierung der Erweiterung beibehalten werden kann, ist die Einschränkung des unter dem Deckelteil liegenden Raums erheblich vermindert.

Die Erweiterung ist mit der weiteren Bremsleuchte versehen, die bei geöffnetem Dach aufgrund der fluchtenden Ausrichtung des Mittelteils der Erweiterung mit dem Verdeckkastendeckel über die Karosserieoberkante hinausragt und von hinten sichtbar ist. Ein fester Aufbau für eine derartige dritte Bremsleuchte auf der Karosserie ist daher vermeidbar. Eine optische Beeinträchtigung des Fahrzeugs bei geschlossenem Dach entfällt. Eine weitere Bremsleuchte kann im Bereich des Heckfensters in den Innenraum integriert sein, ohne die Fahrzeuglinie zu stören.

Das Cabriolet-Fahrzeug weist insbesondere ein Deckelteil auf, das in Doppelfunktion einerseits beim Öffnen zur Aufnahme oder Freigabe des Daches mit der Fahrtrichtung einen spitzen Winkel einschließt und andererseits in einem umgekehrten, mit der Fahrtrichtung einen stumpfen Winkel einschließenden Öffnungslage einen Kofferraum freigibt. Bei herkömmlichen Verdeckkastendeckeln, die nur die Funktion haben, einen Verdeckein- oder -austritt zu ermöglichen, kann im Einzelfall eine erfindungsgemäße Ausbildung vorzusehen sein, insbesondere dann, wenn in geschlossenem Zustand des Verdeckkastendeckels dieser nicht bis unmittelbar an die Sitzlehnen des Innenraumes heranreicht.

Weitere Vorteile und Merkmale ergeben sich aus einem in der Zeichnung dargestellten Ausführungsbeispiel des Gegenstandes der Erfindung.

In der Zeichnung zeigt:
Fig. 1 ein erfindungsgemäßes Cabriolet-Fahrzeug in perspektivischer Gesamtansicht bei geschlossenem Dach und in Packstellung befindlicher Erweiterung (nicht sichtbar),
Fig. 2 das Cabriolet-Fahrzeug nach Fig. 1 bei geöffnetem Dach und fluchtend vor dem Deckelteil befindlicher Erweiterung,
Fig. 3 das Deckelteil in Stellung nach Fig. 1 in Seitenansicht mit in Packstellung befindlicher Erweiterung,
Fig. 4 das Deckelteil in geöffneter Stellung zur Aufnahme des einzufahrenden Daches bei gleichzeitiger Verlagerung der Erweiterung aus der Packstellung und gleichzeitigem Ausschwenken der Seitenflügel der Erweiterung,
Fig. 5 eine ähnliche Ansicht wie Fig. 3 mit ausgefahrener Erweiterung zur Ausbildung der Stellung gemäß Fig. 2 bei geöffnetem Dach,

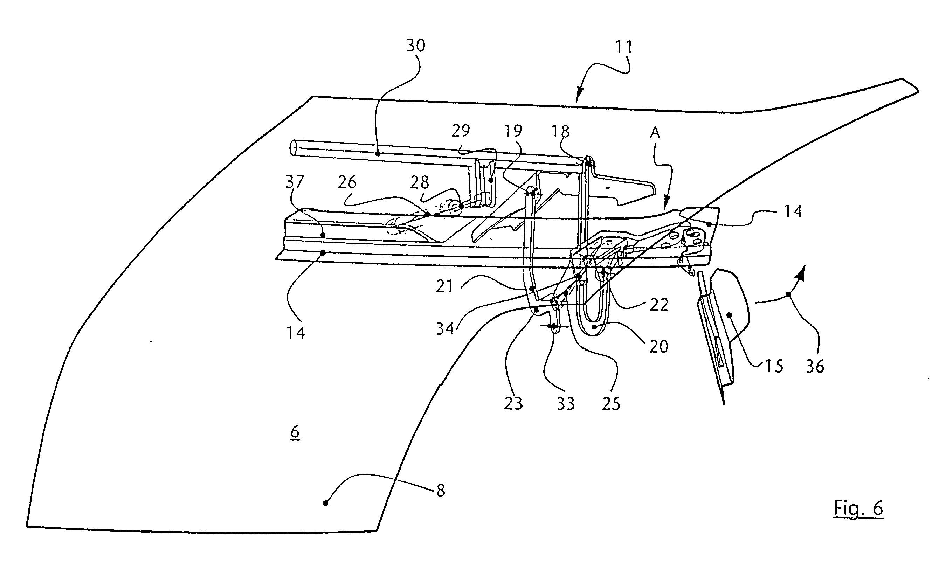

Fig. 6 eine perspektivische Ansicht schräg von unten auf das Deckelteil im geöffneten Zustand gemäß Fig. 4,

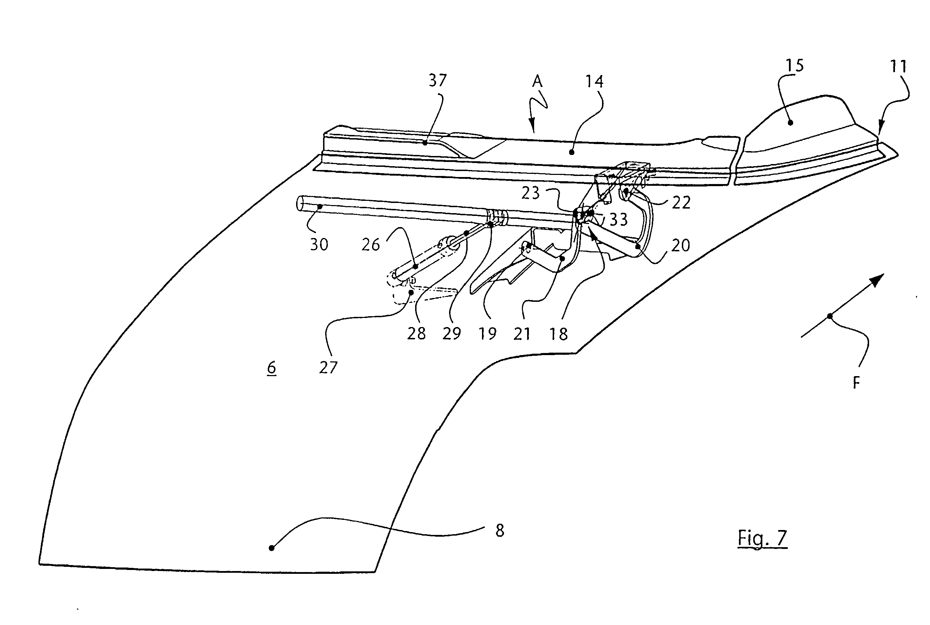

Fig. 7 eine ähnliche Ansicht wie Fig. 6 auf das Deckelteil bei ausgefahrener Erweiterung gemäß Fig. 5,

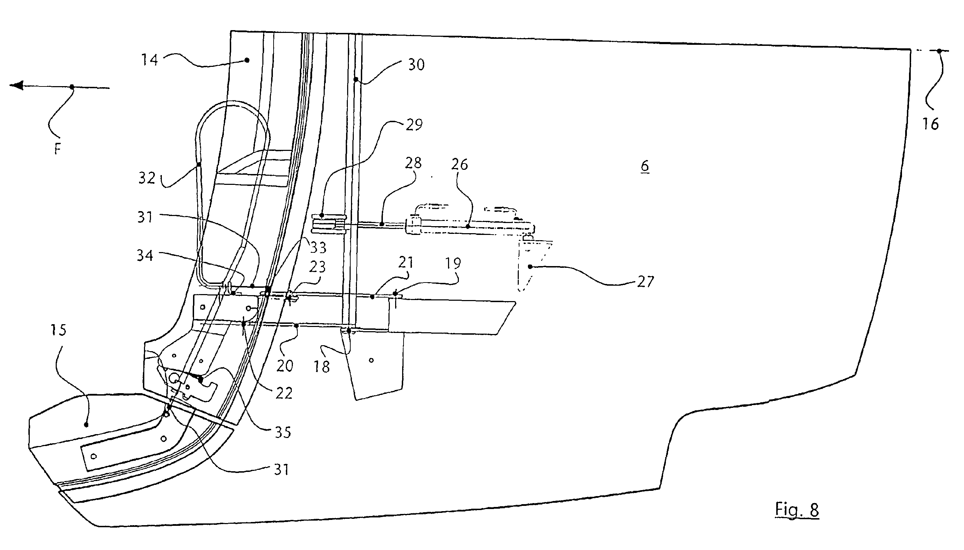

Fig. 8 das halbseitig abgebrochene Deckelteil in Ansicht von oben.

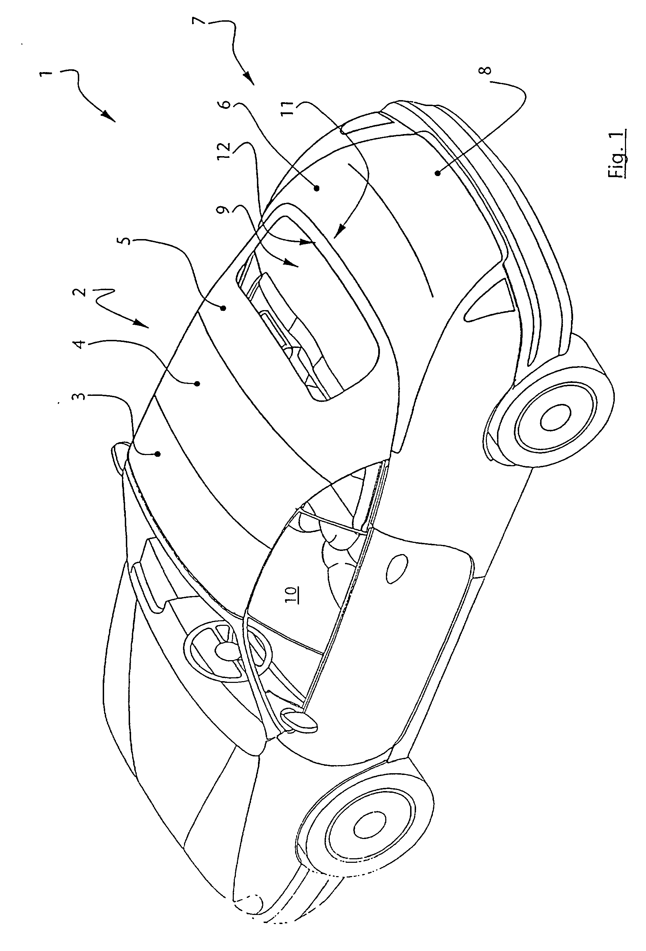

Das im Ausführungsbeispiel dargestellte viersitzige Cabriolet-Fahrzeug 1 weist ein faltbares Dach 2 auf, das mehrere gegeneinander einklappbare Dachteile 3,4,5 umfaßt und im Heckbereich des Fahrzeugs 1 ablegbar ist. Die Dachteile 3,4,5 sind als feste Dachteile ausgebildet, so daß im geschlossenen Fahrzeugzustand (Fig. 1) ein geschlossenes Festdach vorhanden ist. Auch flexible oder bereichsweise flexible Dächer kommen in Frage - ebenso auch zweisitzige Cabriolet-Fahrzeuge.

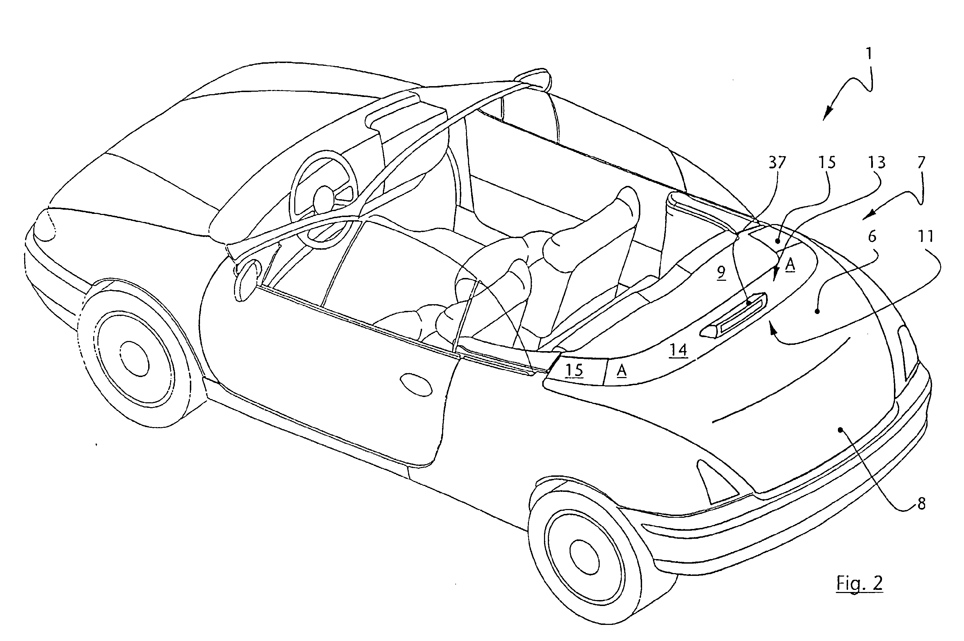

Das Dach 2 ist in geöffneter Stellung (Fig. 2) im Heckbereich 7 des Fahrzeugs 1 abgelegt, wobei der Ablagebereich zumindest teilweise von einem Deckelteil 6 überdeckt ist. Das Deckelteil 6 öffnet zur Dachaufnahme bzw. -freigabe gegen die Fahrtrichtung F in einem spitzen Winkel. Im Ausführungsbeispiel erfüllt das Deckelteil 6 zusätzlich die Funktion einer Kofferraumklappe, kann also zusätzlich auch gegen die Fahrtrichtung F in stumpfem Winkel aufgeschwenkt werden, so daß der heckseitige Abschlußbereich 8 des Deckelteils 6 nach oben schwenkt. Damit wird eine Freigabeöffnung für die Einlagerung von Gepäck eröffnet.

Auch bei herkömmlichen Cabriolet-Fahrzeugen kann bei einem Verdeckkastendeckel ohne diese Doppelfunktion die erfindungsgemäße Ausbildung im Einzelfall wünschenswert sein.

Gemäß dem Ausführungsbeispiel wird zur Aufnahme des Daches 2 zunächst der Heckdeckel 6 gegen die Fahrtrichtung F in spitzem Winkel geöffnet, so daß das Dach 2 in den Bereich heckseitig der Hutablage 9 bzw. eines Abschlusses des Fahrzeuginnenraumes10 eingefahren werden kann.

Um bei geschlossenem Dach (Fig. 1) das Öffnen des Deckelteils 6 zu ermöglichen, setzt dieses mit seiner vorderen Abschlußkante 11 hinter der rückseitigen Abschlußkante 12 des Daches 2 an und wird von dem Dach 2 nicht übergriffen. Dadurch verbleibt bei geöffnetem und eingelagertem Dach 2 bei geschlossenem Deckelteil 6 zwischen dessen vorderer Kante 11 und der Hutablage oder anderweitigem heckseitigem Abschlußteil des Innenraums 10 ein Spalt, der durch die Erweiterung 13 geschlossen wird. Diese umfaßt einen Mittelteil 14 sowie zwei Seitenflügel 15. Die Erweiterung 13 ist flächenhaft ausgebildet und weist eine Oberseite A auf, die bei geschlossenem Dach 2 den von außen sichtbaren Bereich der Erweiterung 13 ausbildet.

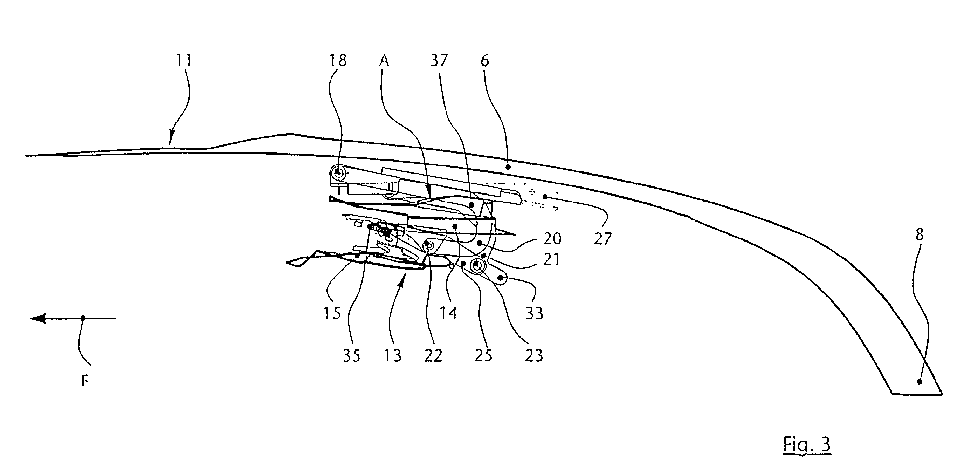

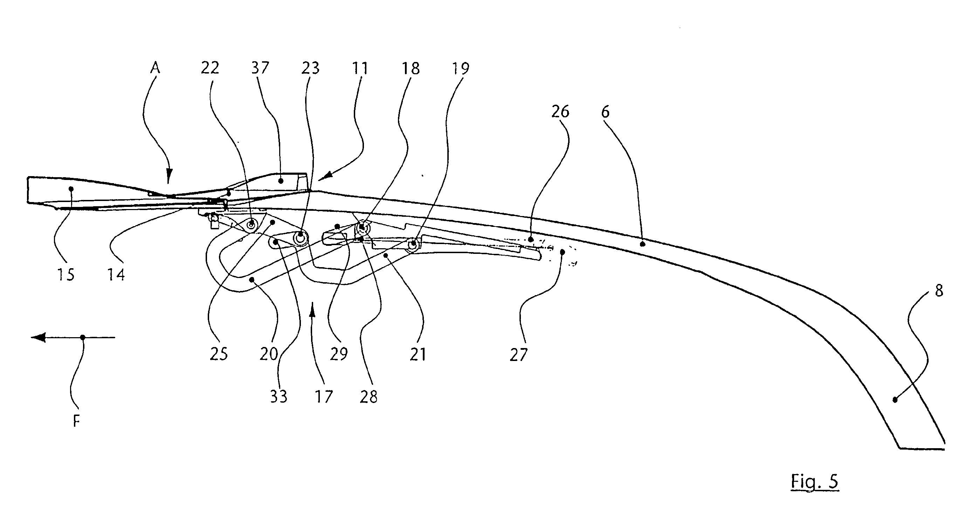

In geschlossener Stellung des Daches 2 (Fig. 1, Fig. 3) ist die Erweiterung 13 derart unterhalb des geschlossenen Deckelteils 6 gehalten, daß die Oberfläche A des Mitteilteils 14 der Erweiterung 13 nach oben weist. Diese ist damit in der gleichen Orientierung gehalten wie auch bei geöffnetem Dach (Fig. 2, Fig. 5).

Die Erweiterung 13 ist gegenüber dem Deckelteil 6 über zwei symmetrisch zur vertikalen Längsmittelebene 16 angeordnete Viergelenke 17 verlagerbar gehalten. Das Viergelenk 17 umfaßt zwei gegenüber dem Deckelteil 6 ortsfeste Schwenkachsen 18,19, die über Hebel 20 und 21 mit der Erweiterung 13 zugeordneten Schwenkachsen 22 und 23 verbunden sind. Das Gelenk 23 ist über einen weiteren Hebel 25 mit der Schwenkachse 22 verbunden. Durch Betätigung des Viergelenks 17 wird die Erweiterung 13 aus ihrer eingefahrenen Packstellung gemäß Fig. 3, in der sie sich unterhalb des Deckelteils 6 befindet, in ihre ausgefahrene Stellung gemäß Fig. 5 über eine kombinierte Schwenk-Schub-Bewegung verlagert, in der sie fluchtend an den vorderen Randbereich 11 des Deckelteils 6 anschließt.

Um die Bewegung der Erweiterung 13 des Deckelteils 6 zu bewirken, sind als Antriebsorgane zwei Hydraulikzylinder 26 vorgesehen, die über Winkel 27 an der Innenseite des Deckelteils 6 gelagert sind und mit ihren Kolbenstangen 28 an einem Betätigungsnocken 29 einer quer zur Fahrtrichtung F verlaufenden Welle 30 angreifen. Auch andere bekannte Antriebsorgane, etwa Elektromotore, ferngesteuerte Bowdenzüge o. dgl., sind denkbar.

Über die Drehung der Welle 30 wird das Gelenk 18 des Viergelenks 17 bewegt, über den Hebel 20 und die weiteren folgenden Hebel 21 und 25 somit die Verlagerung der Erweiterung 13 bewirkt.

Mit dem Ausfahren des Mittelteils 14 der Erweiterung 13 über die Viergelenke 17 ist gleichzeitig ein Ausschwenken der Seitenflügel 15 gegenüber dem Mittelteil 14 verbunden. Diese sind in Packstellung seitlich gegenüber dem Mittelteil 14 eingeklappt. Zur Ausschwenkung der Seitenflügel 15 ist ein Bowdenzug 31 vorgesehen, der an einem Hebel 21 des Viergelenks 17 angeordnet ist und in einer Umlenkung 32 unterhalb des Mittelteils 14 der Erweiterung 13 aus einer parallel zur Fahrtrichtung F verlaufenden Richtung in eine im wesentlichen quer zur Fahrtrichtung F laufende Orientierung überführt wird. Beim Ausfahren des Mittelteils 14 aus der Packstellung (Fig. 3) in die fluchtend vor dem Deckelteil 6 liegende Stellung (Fig. 5) wird die Anlenkung 33 des Bowdenzugs 31 an dem Hebel 21 nach vorne in Richtung eines Wiederlagers 34 verfahren, so daß eine Entspannung des Bowdenzuges eintritt. Über seitlich angeordnete Federn 35 können dann die Seitenflügel 15 in Richtung des Pfeils 36 in eine fluchtende Parallelstellung zu dem Mittelteil 14 verbracht werden.

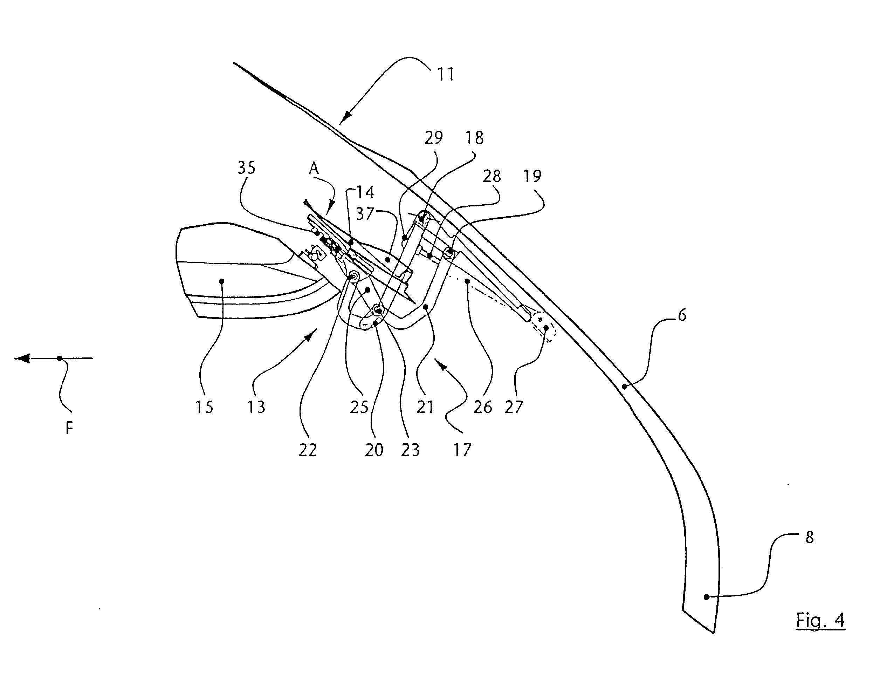

Bei anderer geometrischer Ausbildung kann auch während des Ausfahrens der Erweiterung 13 eine Zugkraft auf den Bowdenzug ausgeübt werden, so daß durch Kraft des Bowdenzuges die Seitenflügel 15 nach oben geschwenkt werden und die Feder gegenläufig bei Entspannung des Bowdenzuges im Sinne eines Einklappens wirkt. Das Ein- und Ausfahren der Erweiterung 13 gegenüber dem Deckelteil 6 findet bei geöffnetem Deckelteil 6 statt (Fig. 4). In dieser Phase der Bewegung ist eine Kollision mit Teilen des Daches 2 oder Teilen der Fahrzeugkarosserie ausgeschlossen.

Die Erfindung eröffnet die besonders vorteilhafte Möglichkeit, auf der Oberfläche A des Mittelteils 14 der Erweiterung 13 eine zusätzliche Bremsleuchte 37 zu montieren, wie sie inzwischen in zahlreichen Ländern vorgeschrieben ist. Eine derartige Bremsleuchte ist bei Cabriolet-Fahrzeugen häufig als festes Bauteil auf der Karosserie installiert, so daß sie die Linienführung des Fahrzeugs sowohl bei geöffnetem als auch bei geschlossenem Dach stört.

Gemäß dem Ausführungsbeispiel ist die Bremsleuchte 37 lediglich bei geöffnetem Dach 2 sichtbar und ist bei geschlossenem Dach 2 unterhalb des Deckelteils 6 auf der Oberfläche A des Mittelteils 14, das vertikal zur Unterseite des Deckelteils 6 beabstandet ist, gelagert. Eine weitere dritte Bremsleuchte ist am Dach 2, beispielsweise im oberen Bereich der Heckscheibe, angeordnet, so daß diese bei geschlossenem Dach sichtbar ist. Eine elektrische Schaltung kann vorgesehen sein, die je nach Ausfahrzustand des Daches 2 die eine oder die andere dritte Bremsleuchte aktiviert bzw. deaktiviert. Je nach Ausbildung des Heckbereichs kann die dritte Bremsleuchte 37 derart in die Oberfläche A integriert sein, daß sie in Seitenansicht des Fahrzeugs optisch praktisch nicht hervortritt.

Dadurch, daß die vordere Kante 11 derart gekrümmt ist, daß sie zu den Fahrzeugseiten hin sich in Fahrtrichtung vorwärts erstreckt und die Erweiterung 13 mit dem Mittelteil 14 und den ausklappbaren Seitenflügeln 15 dieser Erstrec kung folgt und insgesamt im wesentlichen parallelwandig ist, ist durch die gleichorientierte Lagerung bei geschlossenem Dach der Erweiterung 13 unterhalb des Deckelteils 6 nur im vorderen Bereich nahe der Vorderkante 11 des Deckelteils 6 eine Verminderung der Höhe unterhalb des Deckelteils 6 verursacht.

Dieser Raumgewinn ist im Ausführungsbeispiel besonders vorteilhaft, da hier der Raum unterhalb des Deckelteils 6 gleichzeitig als Kofferraum dient, der bei geschlossenem Dach, also bei in Packstellung befindlicher Erweiterung 13, in voller Höhe nutzbar ist, ohne daß ein gesondertes Abteil für das Dach 2 vorgesehen werden müßte.

## Patentansprüche

1. Cabriolet-Fahrzeug (1) mit einem im rückwärtigen Fahrzeugbereich (7) unterhalb eines Deckelteils (6) ablegbaren Dach (2), wobei das Deckelteil (6) zur Freigabe einer Durchtrittsöffnung für das Dach (2) beweglich ist und wobei dem Deckelteil (6) eine gegenüber diesem verlagerbare Erweiterung (13) zugeordnet ist, die in geschlossener Stellung des Daches (2) unterhalb des Deckelteils (6) gehalten und in geöffneter Stellung des Daches (2) in Fahrtrichtung (F) im wesentlichen vor diesem gelegen ist, wobei zumindest ein mittlerer Bereich (14) der Erweiterung (13) bei geschlossenem Dach (2) unterhalb des Deckelteils (6) in einer Packstellung gehalten ist, in der die Seite der Erweiterung (13), die bei geöffnetem Dach (2) deren Oberseite (A) bildet, nach oben weist, **dadurch gekennzeichnet, daß** bei geschlossenem Dach (2) die Erweiterung (13) vertikal beabstandet zum Deckelteil (6) gehalten ist und die Erweiterung mit einer Bremsleuchte (37) versehen ist, die bei geöffnetem Dach in eine über die Karosserieoberkante hinausragende, nach hinten sichtbare Position überführbar ist.

2. Cabriolet-Fahrzeug nach Anspruch 1, **dadurch gekennzeichnet, daß** die Erweiterung (13) über zumindest ein Viergelenk (17), das eine kombinierte Schub-Schwenk-Bewegung der Erweiterung (13) gegenüber dem Deckelteil (6) ermöglicht, an diesem festgelegt ist.

3. Cabriolet-Fahrzeug nach Anspruch 2, **dadurch gekennzeichnet, daß** das Viergelenk (17) in Fahrzeuglängsrichtung angeordnet ist.

4. Cabriolet-Fahrzeug nach einem der Ansprüche 1 bis 3, **dadurch gekennzeichnet, daß** die Erweiterung (13) bei geöffnetem Dach (2) bündig an das Deckelteil (6) anschließt und einen Spalt zwischen dessen vorderer Kante (11) und der Hutablage (9) oder den Rückenlehnen von Fahrzeugsitzen abdeckt.

5. Cabriolet-Fahrzeug nach Anspruch 4, **dadurch gekennzeichnet, daß** zur Abdeckung des Spalts die Erweiterung (13) mehrteilig ausgebildet ist und neben einem mittleren Bereich (14) zumindest zwei gegenüber diesem ausklappbare Seitenflügel (15) umfaßt.

6. Cabriolet-Fahrzeug nach Anspruch 5, **dadurch gekennzeichnet, daß** das Aus- und Einklappen der Seitenflügel (15) mittels eines Bowdenzugs (31) betätigbar ist.

7. Cabriolet-Fahrzeug nach Anspruch 6, **dadurch gekennzeichnet, daß** der Bowdenzug (31) über das die Bewegung der Erweiterung (13) gegenüber dem Dekkelteil (6) bewirkende Viergelenk (17) bewegbar ist.

8. Cabriolet-Fahrzeug nach einem der Ansprüche 1 bis 7, **dadurch gekennzeichnet, daß** zur Verlagerung der Erweiterung (13) gegenüber dem Deckelteil (6) ein Hydraulikantrieb (26) vorgesehen ist.

9. Cabriolet-Fahrzeug nach einem der Ansprüche 1 bis 8, **dadurch gekennzeichnet, daß** das Deckelteil (6) in einer weiteren Bewegungsmöglichkeit zur Freigabe einer Aufnahmeöffnung für Gepäckstücke beweglich ist.

10. Cabriolet-Fahrzeug nach einem der Ansprüche 1 bis 9, **dadurch gekennzeichnet, daß** die Bremsleuchte (37) auf der Oberseite (A) der Erweiterung (13) vorgesehen ist.

## Claims

1. Convertible vehicle (1) having a roof (2) able to be stowed in the rear part (7) of the vehicle below a cover element (6), the cover element (6) being movable to open an opening for the roof (2) to pass through and the cover element (6) having associated with it an extension (13) able to be displaced relative to it which is held below the cover element (6) when the roof (2) is in the raised position and which is situated substantially in front of the cover element (6) in the direction of travel (F) when the roof (2) is in the lowered position, at least a central region (14) of the extension (13) being held, when the roof (2) is raised, below the cover element (6) in a packed position in which that side of the extension (13) which forms its upper side (A) when the roof (2) is lowered faces upwards, **characterised in that**, when the roof (2) is raised, the extension (13) is held spaced away vertically from the cover element (6), and the extension is provided with a brake light (37) which, when the roof is lowered, can be transferred to a position in which it projects beyond the top edge of the bodywork and is visible from the rear.

2. Convertible vehicle according to claim 1, **characterised in that** the extension (13) is fixed to the cover element (6) via at least one four-bar linkage (17) which allows the extension (13) to perform a combined thrust and pivot movement relative to the cover element (6).

3. Convertible vehicle according to claim 2, **characterised in that** the four-bar linkage (17) is arranged in the longitudinal direction of the vehicle.

4. Convertible vehicle according to one of claims 1 to 3, **characterised in that**, when the roof (2) is lowered, the extension (13) continues on from the cover element (6) flush therewith and covers a gap between the front edge (11) of the cover element (6) and the rear parcel shelf (9) or the back-rests of seats of the vehicle.

5. Convertible vehicle according to claim 4, **characterised in that**, to cover the gap, the extension (13) is of a multi-piece form and as well as a central region (14) also has at least two lateral wings (15) which can be folded out relative to the central region (14).

6. Convertible vehicle according to claim 5, **characterised in that** the folding in and out of the lateral wings (15) can be brought about by means of a Bowden cable (31).

7. Convertible vehicle according to claim 6, **characterised in that** the Bowden cable (31) can be moved by means of the four-bar linkage (17) which causes the movement of the extension (13) relative to the cover element (6).

8. Convertible vehicle according to one of claims 1 to 7, **characterised in that** a hydraulic drive (26) is provided to displace the extension (13) relative to the cover element (6).

9. Convertible vehicle according to one of claims 1 to 8, **characterised in that**, in a further possible movement, the cover element (6) is movable to open an opening for receiving pieces of luggage.

10. Convertible vehicle according to one of claims 1 to 9, **characterised in that** the brake light (37) is provided on the upper side (A) of the extension (13).

## Revendications

1. Cabriolet (1) à toit escamotable (2) sous une partie de couvercle (6) dans la zone arrière (7) du véhicule,
la partie de couvercle (6) étant mobile pour libérer une ouverture de passage pour le toit (2) et une extension (13) mobile par rapport à la partie de couvercle (6) est associée à celle-ci, et en position de fermeture du toit (2) elle est tenue sous la partie de couvercle (6) et en position d'ouverture du toit (2) elle est située pratiquement devant celle-ci, dans la direction de déplacement du véhicule (F),
au moins une zone médiane (14) de l'extension (13), lorsque le toit (2) est fermé, est tenue sous la partie de couvercle (6) en position de rangement dans laquelle le côté de l'extension (13) qui forme le côté supérieur (A) lorsque le toit (2) est ouvert, est tourné vers le haut,
**caractérisé en ce que**
lorsque le toit (2) est fermé, l'extension (13) est tenue verticalement écartée de la partie de couvercle (6) et l'extension est munie d'un feu de frein (37) qui, lorsque le toit est ouvert, passe dans une position dépassant de l'arête supérieure de la carrosserie et est visible de l'arrière.

2. Cabriolet selon la revendication 1,
**caractérisé en ce que**
l'extension (13) est reliée par un quadrangle articulé (17) à la partie de couvercle (6), quadrangle qui permet un mouvement de coulissement et de pivotement combiné de l'extension (13) par rapport à la partie de couvercle (6).

3. Cabriolet selon la revendication 2,
**caractérisé en ce que**
le quadrangle articulé (17) est installé dans la direction longitudinale du véhicule.

4. Cabriolet selon l'une des revendications 1 à 3,
**caractérisé en ce que**
lorsque le toit (2) est ouvert, l'extension (13) vient à niveau avec la partie de couvercle (6) et couvre l'intervalle entre son arête avant (11) et la plage arrière (9) ou les dossiers arrière des sièges du véhicule.

5. Cabriolet selon la revendication 4,
**caractérisé en ce que**
pour couvrir l'intervalle, l'extension (13) est formée de plusieurs parties et comprend, à côté d'une zone centrale (14), au moins deux ailes latérales (15) qui peuvent se déployer par rapport à cette zone centrale.

6. Cabriolet selon la revendication 5,
**caractérisé en ce que**
le dépliage et le repliage des volets latéraux (15) est commandé par un câble Bowden (31).

7. Cabriolet selon la revendication 6,
**caractérisé en ce que**
le câble Bowden (31) est commandé par le quadrangle articulé (17) qui déplace l'extension (13) par rapport à la partie de couvercle (6).

8. Cabriolet selon l'une des revendications 1 à 7,
**caractérisé par**
un entraînement hydraulique (27) pour déplacer l'extension (13) par rapport à la partie de couvercle (6).

9. Cabriolet selon l'une des revendications 1 à 8,
**caractérisé en ce que**
la partie de couvercle (6) est mobile selon une autre possibilité de mouvement pour libérer l'ouverture de réception des bagages.

10. Cabriolet selon l'une des revendications 1 à 9,
**caractérisé en ce que**
le feu de frein (37) est prévu sur le côté supérieur (A) de l'extension (13).
